# EUROPEAN PATENT APPLICATION

(11) **EP 1 809 033 A1**
(43) Date of publication of application: **18.07.2007**
(21) Application number: 06000507.1
(22) Date of filing: 11.01.2006
(51) Int. Cl.: H04N 5/64, H01R 35/04

(54) **Digital television signal receiving device**

(71) Applicant: Twinhan Technology Co., Ltd., Hsi-Chih 221 Taipei Hsien (TW)
(72) Inventor: Lui, Nick, Hsi-Chih 221 Taipei Hsien (TW)
(74) Representative: Viering, Jentschura & Partner

(57) **Abstract**

An angle-adjustable digital television (DTV) signal-receiving device of the present invention comprises a housing, a rotating portion, and an inserting portion. The rotating portion is connected with both the housing and the inserting portion, and the housing has an antenna socket that is directly connected to an antenna. When the antenna is inserted in the antenna socket of the housing, a signal-receiving angle can be rotatably adjusted between the housing and the rotating portion. Another signal-receiving angle can be rotatably adjusted between the rotating portion and the inserting portion. Through use of these two different adjustment methods a better receiving angle of the antenna can be found so as to improve the reception of the digital television (DTV) signal-receiving device.

## Description

### BACKGROUND OF THE INVENTION

### 1.Field of the invention

The present invention relates to a receiving device, and more particularly to the receiving device for receiving a digital television (DTV) signal.

### 2. Description of the Prior Art

Digital television (DTV) technology is a new type of broadcasting technology that will transform television as we know it. Digital television (DTV) refers to the complete digitization of the TV signal from transmission to reception. By transmitting TV pictures and sounds as data bits and compressing them, a digital broadcaster can carry more information than is currently possible via analog broadcast technology. In other words, digital television (DTV) can be used to provide interactive video and data services that are not possible with analog technology.

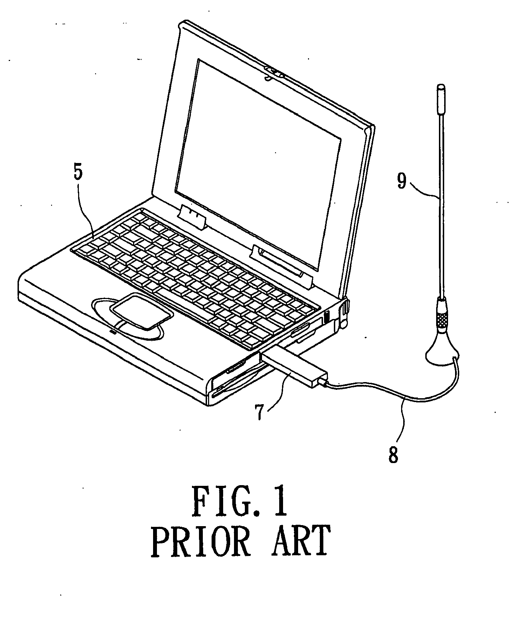

Reference is made to Fig. 1. A conventional digital television (DTV) signal-receiving device **7** is applied to a notebook computer **5,** an antenna **9** is indirectly connected with the digital television (DTV) signal-receiving device **7** by means of a feeding wire **8** for receiving digital television (DTV) signals and then decoding the signals, finally the signals are output and played on the notebook computer **5.**

According to the conventional digital television (DTV) signal-receiving device **7,** the antenna **9** cannot provide an ideal angle-adjustable function to obtain a good signal-reception despite its different location as dictated by an extension of the feeding wire **8.** In addition, the inconvenience of the users' operation and the poor space utilization result from the connected design that has the antenna **9** indirectly connected with the digital television (DTV) signal-receiving device 7 by means of the feeding wire **8.** In addition, because the antenna **9** is indirectly connected with the digital television (DTV) signal-receiving device 7 by means of the feeding wire **8,** the device takes up a lot of space and its operation is inconvenient for a user.

The inventor of the present invention recognizes the above shortage should be corrected and special effort has been paid to research this field. The present invention is presented with reasonable design and good effect to resolve the above problems.

### SUMMARY OF THE INVENTION

It is a primary object of the present invention to provide an angle-adjustable digital television (DTV) signal-receiving device that includes an antenna connected to the digital television (DTV) signal-receiving device, the antenna being freely rotatable for adjusting its signal-receiving angle, and having an interface that is directly connected with the antenna of the digital television (DTV) signal-receiving device.

For achieving the object stated above, the angle-adjustable digital television (DTV) signal-receiving device of the present invention comprises a housing, a rotating portion, and an inserting portion. The housing has an antenna socket directly connected to an antenna. The rotating portion is connected not only with the housing, but also with the inserting portion in a rotatable way. Furthermore, the housing has a first pivotal portion. The rotating portion has a second pivotal portion that is pivotally engaged with the first pivotal portion. The rotating portion has a through hole. The inserting portion has a protruding ring portion, and the inserting portion is connected to the rotating portion by means of the protruding ring portion penetrating into the through hole.

While the antenna is inserted in the antenna socket, a signal-receiving angle is rotatably adjusted between the housing and the rotating portion. Another signal-receiving angle is rotatably adjusted between the rotating portion and the inserting portion to offer a better receiving angle of the antenna so as to improve reception of the digital television (DTV) signal-receiving device.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The above and further advantages of this invention may be better understood by referring to the following description, taken in conjunction with the accompanying drawings, in which:
Fig. 1 is a schematic view showing the setup when applied using a notebook computer of the conventional DTV signal-receiving device of the prior art;
Fig. 2 is a perspective schematic view of a preferred embodiment of the present invention;
Fig. 3 is an exploded perspective view of a preferred embodiment of the preset invention; and
Fig. 4 is a schematic view showing the setup when applied to a notebook computer of the present invention.

The drawings will be described further in connection with the following detailed description of the present invention.

### DETAILED DESCRIPTION OF THE PREFERRED EMBODIMENTS

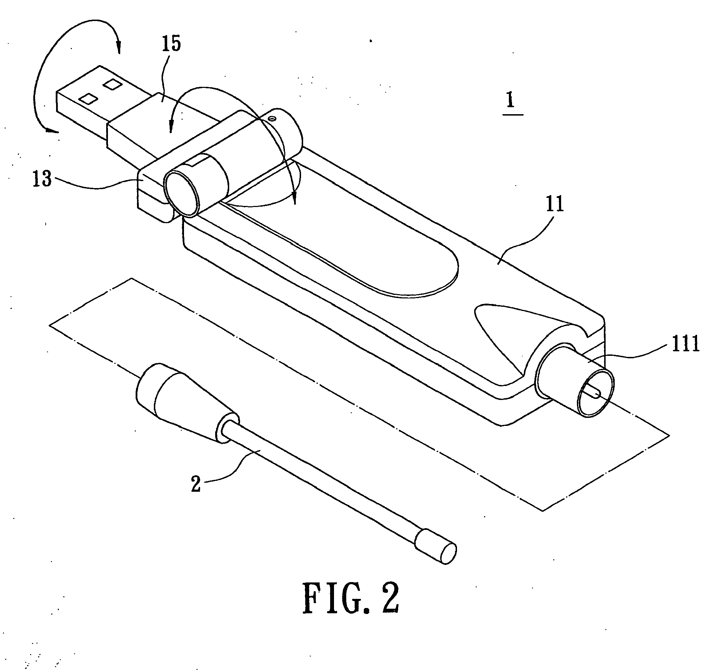

Reference is made to Fig. 2 that shows a perspective schematic view of a preferred embodiment of the present invention. The digital television (DTV) signal-receiving device **1** comprises a housing **11,** a rotating portion **13,** and an inserting portion **15.** The housing **11** has an antenna socket **111** directly connected to an antenna **2** for receiving the digital television (DTV) signal. One side of the rotating portion **13** is connected with the housing **11** in a rotatable way to obtain a corresponding rotation between the housing **11** and the rotating portion **13.** The other side of the rotating portion **13** is connected with the inserting portion **15** in a rotatable way to obtain a corresponding rotation between the rotating portion **13** and the inserting portion **15.** By means of two different kinds of angle-adjustable rotation ways, adjusting the antennae allows the best receiving angle of the antenna **2** to be found so as to improve the reception of the digital television (DTV) signal-receiving device **1.**

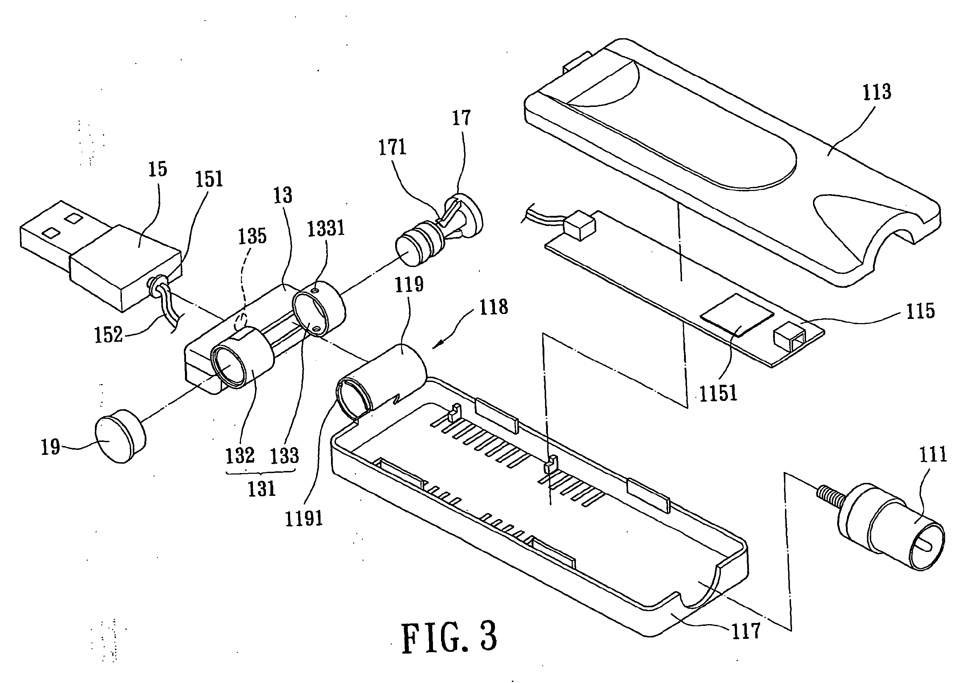

Reference is made to Fig. 3 that shows an exploded perspective view of a preferred embodiment of the preset invention. The housing **11** has an upper casing **113,** a circuit board **115,** a lower casing **117,** and a first pivotal portion **118.** The upper casing **113** and the lower casing **117** are combined together to form a casing, and the first pivotal portion **118** is disposed at one side of the lower casing **117.** The circuit board **115** is electrically connected with the antenna socket **111** and is disposed between the upper casing **113** and the lower casing **117.** The first pivotal portion **118** is a first hollow ring portion **119** and two protruding slices **1191** are disposed on one side of the first hollow ring portion **119.** Moreover, the circuit board **115** has an impedance matching portion **1151** that is electrically connected with the antenna socket **111** to obtain better reception of the housing **11** while the antenna **2** is directly connected to the antenna socket **111.**

One side of the rotating portion **13** has a second pivotal portion **131** and a through hole **135,** wherein the second pivotal portion **131** is pivotally engaged with the first pivotal portion **118** of the housing **11.** The second pivotal portion **131** has a second hollow ring portion **132** and a third hollow ring portion **133** which has two positioning holes **1331.** The first hollow ring portion **119** is inserted into the second hollow ring portion **132** by means of the two protruding slices **1191** and connected between the second hollow ring portion **132** and the third hollow ring portion **133.** This allows a relative rotation movement created between the first hollow ring portion **119** and the second hollow ring portion **132,** or the third hollow ring portion **133.** Furthermore, in order to increase the stability of a connection between the first pivotal portion **118** and the second pivotal portion **131,** a fixing portion **17** is penetrated from the first hollow ring portion **119** into the third hollow ring portion **133,** and the fixing portion **17** has two positioning pieces **171** that are correspondingly connected to the two positioning holes **1331** of the third hollow ring portion **133.** Moreover, a covering **19** covers one side of the second hollow ring portion **132.**

One side of the inserting portion **15** has a protruding ring portion **151.** The inserting portion **15** is connected to the rotating portion **13** in a rotatable way by means of the protruding ring portion **151** that penetrates into the through hole **135.** Moreover, a signal wire **152** is inwardly extended from the protruding ring portion **151** to the first hollow ring portion **119** and is electrically connected with the circuit board **115.** In a preferred embodiment of the present invention, the inserting portion 15 is a USB connector.

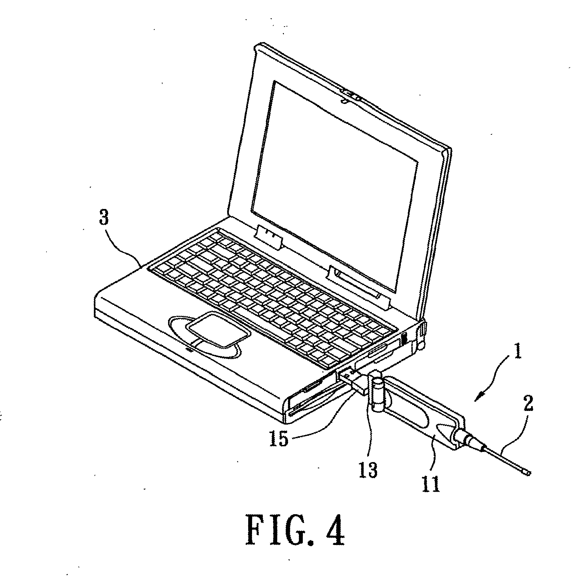

Reference is made to Fig. 4. The digital television (DTV) signal-receiving device **1** of the present invention is applied to a notebook computer **3.** The inserting portion **15** is connected with the notebook computer **3** and an antenna **2** is also connected with the digital television (DTV) signal-receiving device **1.** Two different kinds of connected designs obtain a relative rotation movement between the housing **11** and the rotating portion **13** and another relative rotation movement between the rotating portion **13** and the inserting portion **15** to allow adjustment to the best receiving angle of the antenna **2** so as to improve the reception of the digital television (DTV) signal-receiving device **1.**

Hence, the angle-adjustable digital television signal-receiving device of the present invention has the following features:
1. The antenna of the digital television (DTV) signal-receiving device has two different kinds of angle-adjustable rotations, so users can freely adjust the receiving angles they desire; and
2. The antenna is directly connected with the digital television (DTV) signal-receiving device instead of via a feeding wire, so it is convenient and handy for the user.

Although the present invention has been described with reference to the preferred embodiment thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. An angle-adjustable digital television signal-receiving device, comprising:
a housing having an antenna socket;
a rotating portion connected with the housing in a rotatable way; and
an inserting portion connected with the rotating portion in a rotatable way.

2. The angle-adjustable digital television signal-receiving device of claim 1, wherein the housing has a first pivotal portion and the rotating portion has a second pivotal portion which is pivotally engaged with the first pivotal portion.

3. The angle-adjustable digital television signal-receiving device of claim 2, wherein the first pivotal portion is a first hollow ring portion and two protruding slices are disposed on one side of the first hollow ring portion; the second pivotal portion has a second hollow ring portion and a third hollow ring portion, and the first hollow ring portion is inserted into the second hollow ring portion by means of the two protruding slices and connects between the second hollow ring portion and the third hollow ring portion.

4. The angle-adjustable digital television signal-receiving device of claim 3, further comprising:
a covering that covers one side of the second hollow ring portion.

5. The angle-adjustable digital television signal-receiving device of claim 3, wherein the third hollow ring portion has two positioning holes.

6. The angle-adjustable digital television signal-receiving device of claim 5, further comprising:
a fixing portion penetrating from the first hollow ring portion into the third hollow ring portion, and having two positioning pieces that are correspondingly connected to the two positioning holes.

7. The angle-adjustable digital television signal-receiving device of claim 1, wherein the housing includes:
a casing; and
a circuit board disposed in the casing and electrically connected with the antenna socket.

8. The angle-adjustable digital television signal-receiving device of claim 7, wherein the circuit board has an impedance matching portion which is electrically connected with the antenna socket.

9. The angle-adjustable digital television signal-receiving device of claim 7, further comprising:
an antenna inserted into the antenna socket.

10. The angle-adjustable digital television signal-receiving device of claim 7, wherein the rotating portion has a through hole, the inserting portion has a protruding ring portion and is connected to the rotating portion by means of the protruding ring portion that penetrates into the through hole.

11. The angle-adjustable digital television signal-receiving device of claim 10, wherein a signal wire is inwardly extended from the protruding ring portion and electrically connects with the circuit board.

12. The angle-adjustable digital television signal-receiving device of claim 10, wherein the inserting portion is a USB connector.
